## Europäisches Patentamt
## European Patent Office
## Office européen des brevets

(19)

(11) Publication number: **0 003 418**
**B1**

(12)

# EUROPEAN PATENT SPECIFICATION

(45) Date of publication of patent specification: **14.04.82**

(51) Int. Cl.³: **B 29 H 5/02**

(21) Application number: **79300103.3**

(22) Date of filing: **19.01.79**

(54) Tire loader.

(30) Priority: **26.01.78 US 872421**

(43) Date of publication of application:
**08.08.79 Bulletin 79/16**

(45) Publication of the grant of the patent:
**14.04.82 Bulletin 82/15**

(84) Designated Contracting States:
**DE FR GB IT NL**

(56) References cited:
**US - A - 3 380 115**
**US - A - 3 393 807**

(73) Proprietor: **NRM CORPORATION**
**P.O. Box 6338 3200 Gilchrist Road**
**Akron, Ohio 44312 (US)**

(72) Inventor: **Singh, Anand Pal**
**2343 Oak Trace**
**Youngstown Ohio 44515 (US)**

(74) Representative: **Rooney, Paul Blaise et al,**
**D.Young & Co. 9 & 10 Staple Inn**
**London WC1V 7RD (GB)**

Courier Press, Leamington Spa, England.

Tire loader

This invention relates generally as indicated to a tire loader and more particularly to a loader mechanism for use with tire machinery such as tire curing presses.

Tire loaders have been widely employed in connection with automated tire machinery such as tire curing presses. Most such tire loaders pick up the tire by the upper bead and the shoes of such loader exert a slight pressure on the interior of the upper bead which can cause bead distortion. Moreover, in some tire loaders such pressure is required for centering purposes, yet must be sufficiently light to permit the tire to slip down the loader shoes so that the upper bead of the tire is seated on a lip on the lower edge of the shoes and is positioned properly horizontally. If the tire does not seat properly on the lip it may not be in proper position for loading. Moreover, with the advent of radial tires, it becomes very important that the tire be very accurately located at the center of the mold cavity. Many currently employed loaders are quite complex and require time consuming shimming operations properly to center the loader shoes over the mold cavity. Such shimming operations increase tire press down time resulting in lower productivity. Moreover, many such loaders are quite complex and take up a substantial amount of vertical space which can create clearance problems as well as service problems. Further, with many complex parts subject to wear, loaders may require frequent part replacements or further shimming operations to compensate for such wear.

Some prior art loaders employ a horizontally disposed oscillating actuating plate which may be in the form of a scroll cam plate. Examples of such mechanisms may be seen in Soderquist U.S. Patent 3,380,115 and Soderquist U.S. Patent 3,564,649. Many other prior art loaders employ vertically oriented actuators as seen in Soderquist U.S. Patent 3,167,810. Other loaders such as shown in Schatz et al U.S. Patent 3,845,979 employ a piston-cylinder actuator for each loader shoe.

In connection with tire press loaders which employ a horizontally disposed cam or scroll plate, wherein a follower rides in a cam slot, there is an inherent clearance between the slot and follower which reduces the precision of centering obtainable in addition to creating other obvious problems such as initial cost and wear.

A carrier for radial green tires, not a tire loader, has been proposed in U.S. Patent 3 393 807, including a tire-engaging unit which is expansible and retractable by means of inextensible manually movable crank arms.

There is a need to provide a tire loader which will not distort the bead of a tire when the loader is engaged therewith, which permits a green tire to be accurately located at the center of a mold cavity of a tire press, and which can be centered or adjusted in a minimum amount of time reducing loader alignment down time and resulting in higher productivity for the press.

According to the present invention there is provided a tire loader having a horizontal plate mounted for rotation on a vertical axis, loader shoes mounted for radial movement to and from said axis, and respective link means interconnecting the plate and each shoe, with each link means extending at the same angle with respect to the radial line of motion at its associated shoe whereby rotation of the plate in one direction will reduce said angle thus moving the shoes radially outwardly and rotation of the plate in the opposite direction will increase said angle thus moving the shoes radially inwardly, characterised in that the link means comprises adjustable length connecting rods hingedly connected to the horizontal plate and the respective shoes.

The tire loader has reduced weight, requiring less energy consumption, and ease of serviceability, as well as adjustability, including both centering and stroke limit adjustability as well as vertical height adjustment. In addition, the loader is less subject to wear and has greater repeatable reliability.

For a better understanding of the present invention, and to show how it may be carried into effect, reference will now be made, by way of example, to the accompanying drawings, in which:—

Figure 1 is a top plan view of one form of loader in accordance with the present invention;

Figure 2 is a side elevation partially broken away and in section taken substantially from the line 2—2 of Figure 1;

Figure 3 is a vertical section, again partially broken away, taken from the line 3—3 of Figure 1 and illustrating the support for the loader and the vertical adjustment between the support and the loader; and

Figure 4 is an enlarged vertical section taken substantially on the line 4—4 of Figure 3.

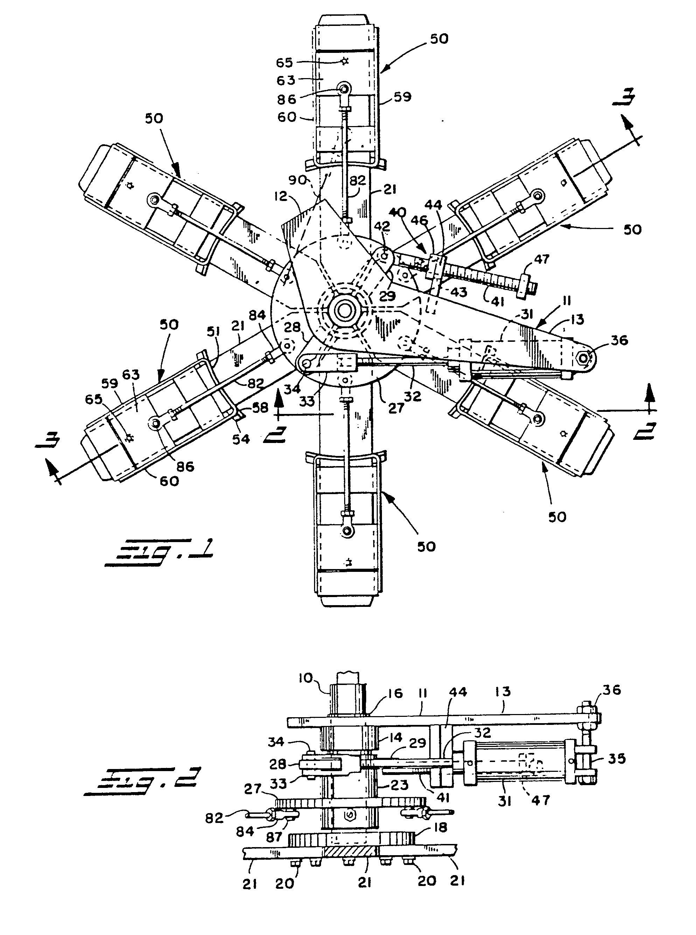

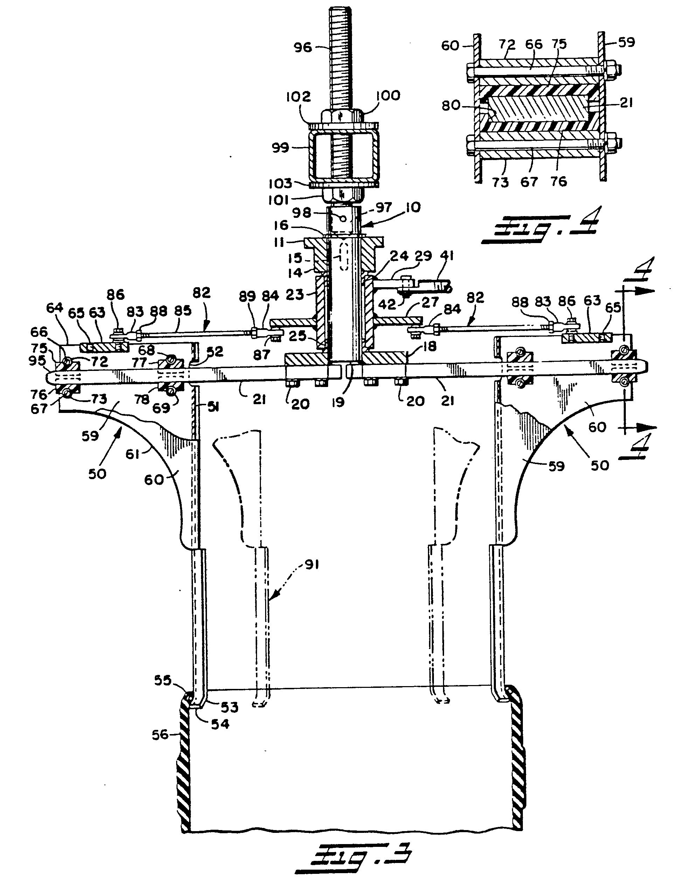

Referring first to Figs. 1—3 it will be seen that the embodiment of the invention illustrated comprises a vertically extending pin 10 to which is secured horizontally extending support plate 11, the profile configuration of which is seen in Figure 1. The plate includes two angularly related arms 12 and 13, the latter being somewhat longer. The underside of the plate includes a vertically projecting hub 14 which is keyed to the pin 10 as indicated at 15. The plate is held in place on the pin by a snap ring or retainer 16.

The lower end of the pin 10 has secured thereto a flange forming ring 18, the lower surface of which is beneath the lower end 19 of the pin. Secured to the underside of the ring flange 18 by the fasteners 20 are six equally circumferentially spaced radially extending horizontal slide bars 21. The slide bars are pointed at their inner ends as seen in Fig. 1 to fit together in the manner indicated.

Between the hub 14 of the support plate 11 and the bottom ring flange 18 the pin is provided with a vertically elongated sleeve journaled top and bottom on the pin 10 as indicated at 24 and 25, respectively. Secured to the sleeve near the lower end thereof is a circular plate 27. Near the upper end, the sleeve is provided with two diametrically opposed projecting arms 28 and 29 which are the same length as the radius of the plate 27.

The sleeve is oscillated by means of piston cylinder assembly 31, the rod 32 thereof being provided with a clevis 33 pivotally connected at 34 to the projecting arm 28. The blind end of the piston cylinder assembly is pivotally supported on stub bracket 35 secured at 36 to the end of arm 13 of the support plate 11.

The stroke of the piston cylinder assembly is limited at both ends by the stroke limiting assembly generally shown at 40. Such assembly comprises a threaded stroke limiter rod 41 pivotally connected at 42 to the arm 29. Such rod 41 may extend through a spherical guide bushing or aperture 43 in stop bracket 44 secured to the underside of the plate 11. Adjustable stroke limiting lock nuts are provided on the threaded limiter rod as indicated at 46 and 47 on each side of the stop block. In the illustrated position, the stop 46 is in engagement with the stop block 44 and the extended condition of the piston cylinder assembly 31 is thus limited. Conversely, when the stop 47 is in engagement with the opposite face of the stop 44, the piston cylinder assembly 31 is limited in its retraction.

For each slide bar 21 there is provided a loader shoe 50, each of which is identical in form and accordingly only one will be described in detail. Each loader shoe 50 is formed from relatively thin gauge metal, almost sheet metal. Each shoe includes a vertically extending spine plate which is slightly curved as seen at 51. Such plate has an aperture 52 therein near its top to accommodate a slide bar 21. Adjacent its bottom it is bent outwardly slightly as indicated at 53 to form a lip 54 adapted to engage the upper bead 55 of the tire 56. It will be appreciated that while the tire 56 is illustrated as a non-belted or bias ply tire, the loader can in equal fashion accommodate belted or radial play tires as well as cured tires. The curvature of the spine plate 53 is determined by the range of tire sizes which may be accommodated by the loader.

Slightly less than half the distance from the bottom, the edges of the spine plate are folded rearwardly to form parallel plates or ears 59 and 60 each of which have the arcuate lower edges seen at 61.

Such parallel plates are interconnected by a bridge plate 63 which extends slightly above the top edges 64. As seen, the bridge block is sufficiently shallow so as to clear the slide bar 21 which passes therebeneath. Each bridge plate may have two or more radially spaced tapped apertures as indicated at 65.

In addition, the parallel plates 59 and 60 are interconnected by four nut and bolt fasteners 66, 67, 68 and 69. As seen more clearly in Figure 4, the shanks of the bolts are substantially elongated and each passed through compression sleeves of spacers seen at 72 and 73. Such spacers also fit within semicircular grooves in the backs of self-aligning slide blocks seen at 75, 76, 77, and 78 for each loader shoe. As seen at 80 in Figure 4, each of the self-aligning slide blocks includes a shallow groove confining the slide bar 21. Preferably the slide blocks are an elastomeric material such as a phenolic resin or nylon having lubricating properties. It can thus be seen that the fasteners 66 together with the spacers not only maintain the plates 59 and 60 parallel and rigidly connected together, but they also hold the slide blocks in place and of course permit their ready removal and replacement.

Each loader shoe is connected to the circular plate 27 by a connecting rod 82. Each connecting rod includes at each end eyes 83 and 84 threadedly connected to the shank 85 which are in turn hingedly connected at 86 and 87 to the top of the bridge plate 63 and the top or bottom of the plate 27, respectively. The effective length of each rod 82 may of course be adjusted by rotating the shank 85 with respect to the eyes 83 and 84, when the respective lock nuts shown at 88 and 89 are loosened. The range of movement may be selected by selecting one of the apertures 65 for the hinge connection 86.

It can now be seen that rotation of the plate 27 will move the loader shoe 50 uniformly radially along the slide bars 21. In Figures 1 the shoes are illustrated at their maximum diameter. Upon retraction of the piston cylinder assembly 31 the plate 27 will rotate in a counterclockwise direction as seen in Figure 1 moving the connecting links uniformly at a common angle with respect to a radius from the pin 10 to achieve the phantom line position 90 seen in Figure 1 when the shoes achieve the position 91 seen in Figure 3. In this manner each link extends at a common angle with respect to a radius so that rotation of the sleeve 23 and thus the plate 27 in one direction will reduce the angle moving the shoes radially outwardly and rotation of the sleeve and accordingly the plate 27 in the opposite direction will increase the angle moving the shoes radially uniformly inwardly. It is noted that the radial outer ends of the slide bars 21 are feathered slightly as indicated at 95 readily to permit the loader shoes to be removed and repositioned thereon.

As seen more clearly in Figure 3, the pin 10 may include an upper threaded removable part 96 which is threaded into a tapped aperture in the pin 10 as seen at 97 and held in place by locking pin 98. The threaded extension 96 of the pin 10 may be employed vertically adjustably to support the loader on horizontal elevator frame member 99. Vertical adjustment and locking is obtained by top and bottom locks nuts 100 and 101 and respective washers 102 and 103. The top nut may be shouldered to fit in a countersunk opening in the top of frame 99 for precision centering. Thus the entire vertical height of the loader with respect to the elevator frame 99 may readily be vertically adjusted. The elevator frame may be of the type wherein a horizontal frame extends between two vertical rails mounted on the press head for vertical and horizontal movement therewith. Conversely, the frame 99 may be of the swinging jib arm type and in any event will normally move vertically and horizontally to pick up and reposition the tire as required.

A limit switch, not shown, may be mounted on the plate 11 which may include a feeler arm which may project below the plate to sense the position of the loader with respect to a tire to be picked up. Such limit switch and sensing arm may be mounted on the extension 12 of plate 11 as seen in Figure 1. The sensor may also be employed to sense the position of the loader with respect to an object adjacent the deposit location of the tire such as a center mechanism of a tire press.

While there is illustrated the employment of six shoes, it will be appreciated that more or less, but more than two, may equally well be employed.

In any event there is provided an inexpensive, easy to operate and maintain loader for tires which can readily be centered and which will minimize bead distortion.

Other modes of applying the principle of the invention may be employed, change being made as regards the details described, provided the features stated in any of the following claims or the equivalent of such be employed.

## Claims

1. A tire loader having a horizontal plate (11) mounted for rotation on a vertical axis, loader shoes (50) mounted for radial movement to and from said axis, and respective link means interconnecting the plate (11) and each shoe (50), with each link means extending at the same angle with respect to the radial line of motion of its associated shoe whereby rotation of the plate (11) in one direction will reduce said angle thus moving the shoes (50) radially outwardly and rotation of the plate (11) in the opposite direction will increase said angle thus moving the shoes (50) radially inwardly, characterised in that the link means comprises adjustable length connecting rods (82) hingedly connected to the horizontal plate (11) and the respective shoes (50).

2. A loader according to claim 1, wherein each connecting rod (82) is substantially continuously adjustable in length over a given range.

3. A loader according to claim 1 or claim 2, including a piston-cylinder assembly (31) operative to rotate the plate (11) in said one and opposite directions, and an adjustable stop (40) limiting the rotation of the plate (11) in said one direction and thus the movement of said shoes radially outwardly.

4. A loader according to any one of claims 1 to 3, wherein the plate (11) is journaled on a vertically extending non-rotatable pin (10), and including radially extending slide bars (21) secured to the bottom of the pin (10), one for each loader shoe (50), and means mounting each loader shoe (50) for sliding movement on its respective slide bar (21).

5. A loader according to claim 4, wherein each loader shoe (50) is supported on its respective slide bar (21) by horizontally spaced pairs of self-aligning slide blocks (75, 76, 77, 78) of elastomeric material, each block being in sliding frictional engagement with the slide bar (21).

6. A loader according to claim 5, wherein each loader shoe (50) includes two parallel ears (59, 60) and fasteners (66, 67, 68, 69) interconnecting the ears, each fastener extending through a sleeve (72, 73) spacing the ears (59, 60).

7. A loader according to claim 6, including four such fasteners (66, 67, 68, 69) and sleeves (72, 73), each sleeve fitting in a semi-circular groove in the back of a slide block (75, 76, 77, 78).

8. A loader according to claim 6, including a bridge plate (63) extending between the ears (59, 60), said respective link means being hingedly connected thereto at alternative locations thereon.

9. A loader according to claim 4, wherein the plate (11) includes a hub (14) journaled on the pin (10) and an arm (28) projecting from the hub (14), the arm (28) being pivotally connected to the rod (32) of the piston-cylinder assembly (31).

10. A loader according to claim 9, including a second arm (29) projecting from the hub (14) a stop rod (41) pivotally connected to the second arm (29), a fixed stop block (44) through which the stop rod (41) slidably moves, and adjustable stops (46, 47) on the stop rod (41) on opposite sides of the stop block (44) operative to limit rotation of the plate (11) in said one and opposite directions.

## Revendications

1. Chargeur de pneumatiques comportant une plaque horizontale (11) montée pour tourner sur un axe vertical, des patins de chargeur (50) montés pour se rapprocher et s'écarter radialement dudit axe, et des moyens de liaison respectifs reliant la plaque (11) et chaque pation (50), chaque moyen de liaison faisant le même angle avec la ligne radiale de mouvement située au niveau du patin qui lui est associé de sorte que la rotation de la plaque dans un premier sens réduit ledit angle déplaçant ainsi les patins (50) radialement vers l'extérieur et que la rotation de la plaque dans le sens opposé augmente ledit angle déplaçant ainsi les patins (50) radialement vers l'intérieur, caractérisé en ce que les moyens de liaison comprennent des tringles de liaison à longueur réglable (82) reliées par articulations á la plaque horizontale (11) et aux patins respectifs (50).

2. Chargeur selon la revendication 1, dans lequel chaque tringle de liaison (82) est sensiblement continue et ajustable en longueur dans un intervalle donné.

3. Chargeur selon la revendication 1 ou 2, comportant un ensemble piston-cylindre (31) pouvant agir pour faire tourner la plaque (11) dans lesdits premier sens et sens opposé, et une butée réglable (40) limitant la rotation de la plaque (11) dans ledit premier sens et ainsi le mouvement desdits patins radialement vers l'extérieur.

4. Chargeur selon l'une quelconque des revendications 1 à 3, où la plaque (11) tourillonne sur un axe non rotatif s'étendant verticalement (10), et comportant des glissières qui s'étendent radialement (21) fixées au bas de l'axe (10), à raison d'une par patin de chargeur (50), et des moyens montant chaque patin de chargeur (50) en vue d'un mouvement coulissant sur sa glissière respective (21).

5. Chargeur selon la revendication 4, où chaque patin de chargeur (50) est supporté sur sa glissière respective (21) par des paires horizontalement espacées de blocs glissoirs à autocentrage (75, 76, 77, 78) en matière élastomère, chaque bloc étant en contact frottant glissant avec le glissière (21).

6. Chargeur selon la revendication 5, où chaque patin de chargeur (50) comporte deux oreilles parallèles (59, 60) et des ensembles de fixation (66, 67, 68, 69) reliant entre elles les oreilles, chaque ensemble de fixation s'étendant à travers un manchon (72, 73) qui espace le oreilles (59, 60).

7. Chargeur selon la revendication 6, comportant quatre tels ensembles de fixation (66, 67, 68, 69) et manchons (72, 73); chaque manchon s'insérant dans un gorge semicirculaire ménagée dans le dos d'un block glissoir (75, 76, 77, 78).

8. Chargeur selon la revendication 6, comportant une plaque de pontage (63) qui s'étend entre les oreilles (59, 60), ledit moyen de liaison respectif lui étant relié par articulation en des emplacements interchangeables.

9. Chargeur selon la revendication 4, où la plaque (11) comporte un moyeu (14) tourillonnant sur l'axe (10) et un bras (28) saillant à partir du moyeu (14), le bras (28) étant relié à pivotement à la tige (32 de l'ensemble piston-cylindre (31).

10. Chargeur selon la revendication 9, comportant un second bras (29) saillant à partir du moyeu (14) une tige d'arrêt (41) reliée à pivotement au second bras (29), un bloc de butée fixe (44) à travers lequel la tige d'arrêt (41) se meut à coulissement, et de butées réglables (46, 47) prévues sur la tige d'arrêt (41) sur des côtés opposés du bloc d'arrêt (44) agissant pour limiter la rotation de la plaque (11) dans lesdits premier sens et sens opposé.

**Patentansprüche**

1. Vorrichtung zum Versetzen von Reifen, mit einer horizontalen, drehbar auf einer vertikalen Achse montierten Platte (11), radial zu und von dieser Achse beweglich angeordneten Versetzchuhen (50), und mit jeweils die Platte (11) und einen jeden Versetzschuh (50) miteinander verbindenden Gelenkmitteln, wobei sich jedes Gelenkmittel in dem gleichen Winkel bezüglich der Radiallinie der Bewegung des zugeordneten Versetzschuhes erstreckt, derart, daß die Drehung der Platte (11) in der einen Richtung diesen Winkel reduziert und die versetzschuhe (50) radial nach außen bewegt und daß die Drehung der Platte (11) in der entgegengesetzten Richtung diesen Winkel vergrößert un die Versetzschuhe (50) radial nach innen bewegt, dadurch gekennzeichnet, daß die Gelenkmittel längeneinstellbare Verbindungsstangen (82) beinhalten, die gelenkig mit der horizontalen Platte (11) und dem jeweiligen Versetzschuh (50) verbunden sind.

2. Vorrichtung zum Versetzen nach Anspruch 1, bei der jede Verbindungsstange (82) im wesentlichen kontinuierlich in ihrer Länge über einen vorgegebenen Längenbereich einstellbar ist.

3. Vorrichtung zum Versetzen nach Anspruch 1 oder 2, beinhaltend ein Kolben-Zylinder-Aggregat (31) zum Drehen der Platte (11) in die eine oder die entgegengesetzte Richtung, sowie beinhaltend einen einstellbaren Anschlag (40) zue Begrenzung der Drehung der Platte (11) in die eine Richtung und damit der Bewegung der Versetzschuhe radial nach außen.

4. Vorrichtung zum Versetzen nach einem der Ansprüche 1 bis 3, bei der die Platte (11) auf einem sich vertikal erstreckenden, undrehbaren Zapfen (10) gelagert ist, un beinhaltend sich radial nach außen erstreckende Gleitschienen (21), die an dem Boden des Zapfens (10) befestigt sind, wobei jeweils eine Gleitschiene (21) für jeden Versetzschuh (50) vorgesehen ist und ferner Mittel für die gleitbewegliche Anordnung eines jeden Versetzschuhes (50) auf der jeweiligen Gleitschiene (21) vorgesehen sind.

5. Vorrichtung zum Versetzen nach Anspruch 4, bei der jeder Versetzschuh (50) auf seiner jeweiligen Gleitschiene (21) durch horizontal abständige Paare von sich selbst ausrichtenden Gleitblöcken (75, 76, 77, 78) aus elastomerem Material getragen ist, wobei jeder Block in gleitender Reibverbindung mit der Gleitschiene (21), steht.

6. Vorrichtung zum Versetzen nach Anspruch 5, bei der jeder Versetzschuh (50) zwei parallele ohrförmige Ansätze (59, 60) sowie die ohrförmigen Ansätze miteinander verbindende Befestigungselemente (66, 67, 68, 69) beinhaltet, wobei jedes Befestigungselement sich durch eine Buchse (72, 73) erstreckt, die die ohrförmigen Ansätze (59, 60) auf Abstand hält.

7. Vorrichtung zum Versetzen nach Anspruch 6, beinhaltend vier derartige Befestigungselemente (66, 67, 68, 69) und Buchsen (72, 73), wobei jede Buchse passend in einer halbkreisförmigen Ausnehmung in der Rückseite eines Gleitblockes (75, 76, 77, 78) sitzt.

8. Vorrichtung zum Versetzen nach Anspruch 6, beinhaltend eine Überbrückungsplatte (63), die sich zwischen den ohrförmingen Ansätzen (59, 60) erstreckt, wobei die jeweiligen Gelenk-

mittel gelenkig daran ar festigt sind.

9. Vorrichtung zum V 4, bei der die Platte (1 haltet, die auf dem Zap ein von der Nabe (14) vorgesehen ist, der sch (32) des Kolben-Zylind bunden ist.

10. Vorrichtung Anspruch 9, beinhalten Nabe (14) vorsteher schwenkbar mit dem zv dene Stoppstange (41), block (44), durch den si gleitend bewegt, und (46, 47) auf der Stop gengesetzten Seiten de denen die Drehbewegu eine und die entgege grenzbar ist.

0 003 418

Fig. 1

Fig. 2

Fig. 4

Fig. 3

2